# EUROPEAN PATENT APPLICATION

(11) **EP 4 825 568 A1**
(43) Date of publication of application: **21.10.2026**
(21) Application number: 25170701.4
(22) Date of filing: 15.04.2025
(51) Int. Cl.: B29D 30/06, B29C 35/04

(54) **A HEATING ARRANGEMENT FOR CURING A GREEN TIRE IN A CURING DEVICE**

(71) Applicant: Bridgestone Europe NV/SA, 1930 Zaventem (BE)
(72) Inventor: Ivonini, Marco, 00128 Roma (IT); Rypak, Martin, 00128 Roma (IT); Santarelli, Giulio, 00128 Roma (IT); Arcangeli, Giulio, 00128 Roma (IT)
(74) Representative: Marchetti, Alessio

(57) **Abstract**

The invention relates to a heating arrangement for curing a green tire in a curing device, comprising a nozzle arrangement comprising a plurality of nozzles configured to provide steam to the green tire, wherein the plurality of nozzles are configured to provide the steam in a downward direction, wherein the downward direction is a direction forming an angle of o° to 90° with the axis of rotation of the green tire. The invention further relates to a curing device comprising the heating arrangement and a method and a computer program for providing steam in the downward direction.

## Description

### TECHNICAL FIELD

The present invention relates to a heating arrangement for curing a green tire in a curing device and a method for curing a green tire in a curing device. The present invention also relates to a computer-readable storage medium storing program code, the program code comprising instructions for carrying out such a method.

### BACKGROUND

In the manufacturing process of e.g., automotive tires, the curing stage is a critical step wherein a green tire undergoes vulcanization-a chemical process involving heat and pressure to form a resilient, durable product suitable for road use. To achieve optimal tire quality, the curing process requires precise control over temperature and pressure within a curing press, which typically includes a mold and an internal steam bladder. The steam bladder is essential in this process, as it expands within the green tire and applies outward pressure to conform the tire to the mold's specifications. This uniform pressure ensures that the tire's components are properly vulcanized, resulting in consistent structural integrity and performance.

One of the primary challenges encountered in existing curing methods is maintaining a constant steam pressure within the steam bladder. During press opening and closing, there may be a temperature gradient between the top part and bottom part of the tire mold. In addition, there may be a second temperature gradient between the green tire and the tire mold. Thereby, during insertion/removal of the tire, substantial temperature gradients may form in the mold system. The temperature gradient may lead to forming of condensate in the bladder during the curing cycle of the green tire. Over time, the accumulation of condensate results in a puddle, particularly at the bottom of the bladder.

Due to the condensation of the steam the temperature in specific regions within the bladder might drop, as the presence of water absorbs heat that would otherwise contribute to maintaining a consistent steam temperature. Moreover, the presence of liquid condensate in the bladder might interrupt an even distribution of steam, leading to localized variations in pressure, disrupting the uniform outward force required for the green tire to conform to the mold, resulting in inconsistencies in the cured tire's final structure and performance characteristics.

This non-uniform distribution of heat and pressure can lead to non-uniform vulcanization. Areas exposed to lower temperatures or uneven pressure may experience incomplete vulcanization, reducing the durability and elasticity of the tire and potentially causing performance issues or premature tire failure.

Thus, the objective of the present invention is to address the issue of steam condensation and ensure a consistent, uniform pressure and temperature distribution within the steam bladder throughout the curing process. The invention aims to prevent the formation of condensate puddles, enabling reliable, even heat and pressure transfer to the green tire and ensuring a high-quality, uniformly cured tire product.

### SUMMARY OF THE INVENTION

The objective of the present invention is to provide a heating arrangement for curing a green tire in a curing device and a method for curing a green tire in a curing device, which overcome one or more of the above-mentioned problems of the prior art.

A first aspect of the invention provides a heating arrangement for curing a green tire in a curing device. The heating arrangement comprises a nozzle arrangement. The nozzle arrangement comprises a plurality of nozzles configured to provide steam to the green tire, wherein the nozzles configured to provide the steam in a downward direction wherein preferably the downward direction is a direction having an angle of 0° to 90° with the axis of rotation R of the green tire.

With the above it is possible to counteract any temperature changes/gradients occurring inside the green tire due to thermodynamics of a heated vapor and/or condensation of a heated vapor inside the green tire.

In a first implementation of the heating arrangement according to the first aspect, the plurality of nozzles are arranged in a substantially cylindrical shape, wherein preferably the nozzle arrangement has a cylindrical shape.

With the above a more uniform distribution of steam inside the green tire is ensured.

In a further implementation of the heating arrangement according to the first aspect, the plurality of nozzles are configured to provide a substantially triangular or conical-shape pattern, wherein preferably the plurality of nozzles are cone nozzles or flat-fan nozzles, wherein preferably, the angle of the steam provided by the nozzle is between 15° and 65°, preferably between 20° and 55°, more preferably between 30° and 45°, most preferably between 37.5° and 42.5°.

These kinds of nozzles provide a wide spread of steam, ensuring a uniform steam provision.

In a further implementation of the heating arrangement according to the first aspect, the angle of plurality of nozzles in the downward direction is adjustable.

With the above, an optimal steam provision by the plurality of nozzles can be ensured.

In a further implementation of the heating arrangement according to the first aspect, the device further comprises means for determining a temperature gradient in the green tire; and a controlling means configured to control the steam provided by the plurality of nozzles based on the determined temperature gradient in the green tire.

In a further implementation of the heating arrangement according to the first aspect, the controlling means is configured to increase the steam provided by the plurality of nozzles, if it is determined that the gradient in the green tire decreases.

By adjusting the steam provided by the plurality of nozzles based on measurements, it can be ensured that steam is provided optimally based on the current situation in the curing device.

In a further implementation of the heating arrangement according to the first aspect, the nozzle arrangement is positioned in a central axis position of the green tire, wherein the plurality of nozzles are configured to provide steam to a downward direction bulge portion of the green tire.

The downward direction bulge portion of the green tire is the position in which condensate most likely forms a puddle. By directing the plurality of nozzles in this direction, the detrimental effects of the puddle can be counteracted.

In a further implementation of the heating arrangement according to the first aspect, the plurality of nozzles comprise at least 4 nozzles, preferably at least 5 nozzles, more preferably at least 6 nozzles, even more preferably at least 7 nozzles and most preferably at least 8 nozzles.

For vehicle tire manufacturing, the above number of nozzles have shown to provide an optimal amount of heat for ensuring even curing of the green tire.

In a further implementation of the heating arrangement according to the first aspect, the plurality of nozzles have a cylindrical shape, wherein at least two layers of nozzles are arranged in the nozzle arrangement.

In a further implementation of the heating arrangement according to the first aspect, the plurality of nozzles are arranged in at least two layers in the downward direction.

In a further implementation of the heating arrangement according to the first aspect, the nozzle arrangement is rotatable.

By rotating the nozzle arrangement, steam can be provided inside the green tire more evenly.

The methods according to the second aspect of the invention can be performed by the device according to the first aspect of the invention. Further features or implementations of the method according to the second aspect of the invention can perform the functionality of the device according to the first aspect of the invention and its different implementation forms.

A second aspect of the invention refers to a method for curing a green tire in a curing device. The method comprises the step of providing steam in a downward direction, preferably providing steam to a low temperature area and/or low-pressure area in the green tire.

In an implementation of the method of the second aspect, the method further comprises providing steam to the inside of a green tire for curing the green tire, while providing steam to the green tire, determining a temperature gradient and/or steam pressure gradient in the green tire, and providing the steam in the downward direction, based on the determined temperature gradient and/or steam pressure gradient in the green tire.

With the above, it can be ensured that steam is provided to the green tire evenly.

In a further implementation of the method of the second aspect, wherein determining the temperature gradient and/or the steam pressure gradient comprises determining a steam pressure change in the green tire comprises determining that a liquid has formed inside the green tire, and providing steam to a low temperature area in the green tire comprises providing steam in the direction of the liquid.

With the above condensation inside the curing device can be determined and counteracted.

In a further implementation of the method of the second aspect, the curing device comprises the heating arrangement according to the first aspect. The method further comprises adjusting the direction in which the nozzles provide steam, based on the determined temperature and/or steam pressure gradient in the green tire.

With the above, the direction of steam provision can be adjusted during the curing process. This allows to dynamically react to changes during the curing.

A third aspect of the invention refers to a curing device for curing a green tire. The curing device comprises the heating arrangement according to the first aspect and a means for receiving the green tire.

In an implementation of the curing device according to the third aspect, the curing device further comprises a means for determining a steam pressure in the green tire, and a controlling means configured control the heating arrangement (100) to perform the method according to the second aspect.

A further aspect of the invention refers to a computer program comprising instructions that, when executed by a processor, instruct a heating arrangement according to the first aspect to perform the method according to the second aspect.

A further aspect of the invention refers to a computer-readable storage medium storing program code, the program code comprising instructions that when executed by a processor instruct a heating arrangement according to the first aspect to carry out the method of the second aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is a side view of a nozzle arrangement in accordance with an embodiment of the present invention,
- FIG. 2: is a side view of a nozzle arrangement in accordance with an embodiment of the present invention,
- FIG. 3: is a side view of a nozzle arrangement in accordance with an embodiment of the present invention,
- FIG. 4: is an angled view of three exemplary nozzle arrangement in accordance with an embodiment of the present invention,
- FIG. 5: is a cross-sectional side view of one half of a curing device in accordance with an embodiment of the present invention,
- FIG. 6: is a flow chart of a method for curing a green tire in accordance with an embodiment of the present invention.
- FIG. 7: is a flow chart of a method for curing a green tire in accordance with an embodiment of the present invention.

### DETAILED DESCRIPTION OF EMBODIMENTS

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims.

The present invention relates to a heating arrangement for curing a green tire 150 in a curing device 200. The heating arrangement comprises a nozzle arrangement 100. The nozzle arrangement 100 comprises a plurality of nozzles 110 that are configured to provide steam to the green tire 150. In particular, the plurality of nozzles 110 are configured to provide the steam in a downward direction D.

Preferably, the plurality of nozzles 110 are configured to provide steam to a downward direction bulge portion 152 of the green tire. The downward direction bulge portion 152 of the green tire is a portion of a bulging portion (i.e., a portion of the green tire where a cross section of the green tire in the tire's axial direction has the largest width, said portion usually corresponds to the sidewall portion of the tire) of the green tire 150 is located in axial direction of the tire. Preferably, the downward direction bulge portion 152 is a portion of the tire in which cold air or condensate water will accumulate inside the green tire 150. Since the arrangement of heating arrangement and insertion position of green tires typically does not change during the life cycle of a curing device, the positional relationship between the nozzle arrangement 100 and the bulging portion of the green tire 152 typically does not change.

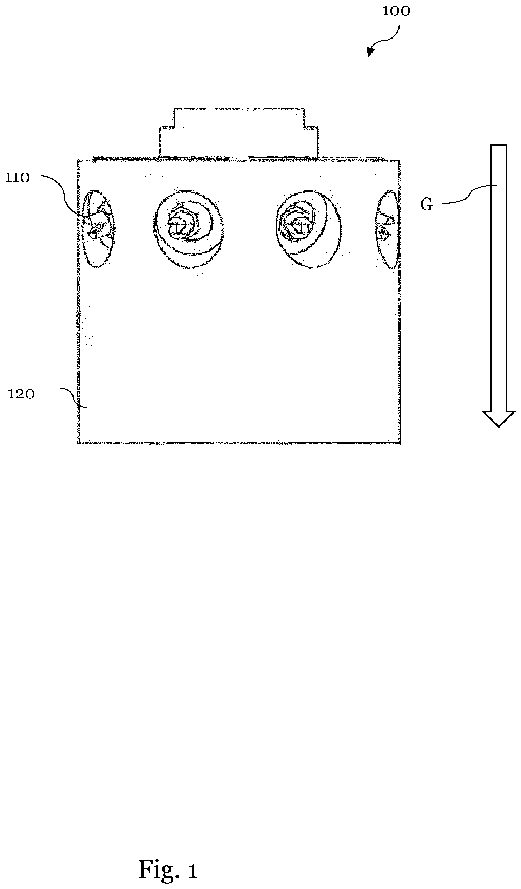

One exemplary nozzle arrangement 100 is shown in Fig. 1. The nozzle arrangement 100 comprises the plurality of nozzles 110. Preferably, the nozzle arrangement 100 has a substantially cylindrical shape. However, other shapes of the nozzle arrangement 100 are also possible.

Preferably, the plurality of nozzles 110 are arranged in a substantially circular shape, substantially arranged on a plane P, wherein the plurality of nozzles 110 provide steam in an outside direction of the circular shape. In some examples, the plurality of nozzles 110 form a substantially cylindrical shape. In such an arrangement, the plurality of nozzles 110 may be arranged substantially in two or more circular arrangements on two or more planes Px, forming the substantially cylindrical shape. Other shapes for arranging the plurality of nozzles 110 are also possible. The shape may depend on the form of the nozzle arrangement 100 and/or the number of nozzles forming the plurality of nozzles 110.

Preferably, the plurality of nozzles 110 comprise at least 3, preferably at least 4, more preferably at least 5, even more preferably at least 6, even more preferably at least 7 and most preferably at least 8 nozzles, and/or at most 12, preferably at most 11, even more preferably at most 10, even more preferably at most 9 and most preferably at most 8 nozzles.

Preferably, the plurality of nozzles 110 are configured to provide a substantially triangular or conical shape pattern of steam. Preferably the plurality of nozzles 110 are cone nozzles or flat-fan nozzles. Preferably, the spread-angle of the steam provided by the plurality of nozzles 110 is between 15° and 65°, preferably between 20° and 55°, more preferably between 30° and 45°, most preferably between 37.5° and 42.5°, wherein preferably the spread-angle is achieved using steam at a pressure of 40 psi.

Preferably, the nozzle arrangement 100 is configured to be positioned in the center of a green tire 150 in the curing device 200.

The plurality of nozzles 110 may be embedded in the nozzle arrangement 100. This protects the plurality of nozzles 110 during replacement of the cured tire with a new green tire 150. Alternatively, the plurality off nozzles may be provided on the outside surface of the nozzle arrangement 100.

In the example of Fig. 1, the plurality of nozzles 110 are each embedded in a respective cylindrical through hole extending through a side surface of the (preferably cylindrical) nozzle arrangement 100. For example, the plurality of nozzles 110 may be embedded in the nozzle arrangement 110, such that the plurality of nozzles do not protrude outside the radially outer surface of the (preferably cylindrical) nozzle arrangement 100. Fixings for securing the plurality of nozzles 110 in their respective through holes are provided at an end surface (a surface perpendicular to the side surface) of the nozzle arrangement 100. In some examples, the fixings are part of the plurality of nozzles 110. Alternatively, the fixing may be a bracket configured to secure the respective nozzle of the plurality of nozzles 110 in their respective through hole.

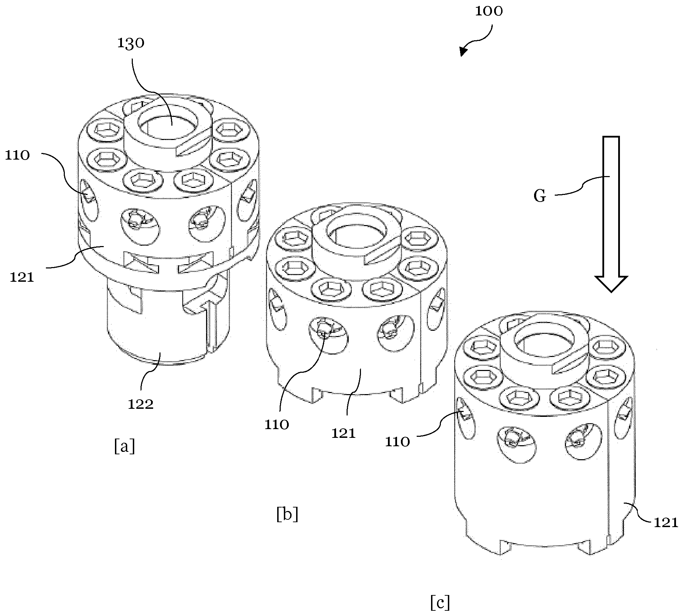

Preferably, the nozzle arrangement 100 comprises a mounting channel 130 (shown in Fig. 4). The mounting channel 130 may be configured to receive a mounting means for mounting the nozzle arrangement 100 in the heating arrangement. Preferably, the mounting channel 130 is configured to receive a mounting means for mounting the nozzle arrangement 100 in the curing device 200. In some examples, the nozzle arrangement 100 comprises one or more bearings, such that the nozzle arrangement 100 can be rotatably mounted. Alternatively, the mounting means itself is rotatable. In such examples, the nozzle arrangement 100 can be rotatably mounted to the heating arrangement and/or the curing deice without comprising bearings.

The heating arrangement may comprise a means for generating steam for generating and providing to the plurality of nozzles steam. Additionally or alternatively, other heating agents can be provided by the means for generating steam, even though, for simplicity reasons, this invention is mostly described with reference to steam. For example, other heated gases or liquids may be provided by the means for generating steam to the plurality of nozzles 110. Additionally or alternatively, the heating arrangement comprises a terminal for receiving a heating agent (e.g., steam) from an external means for generating steam.

Preferably, the nozzle arrangement 100 comprises one or more channels (not shown) for directing steam to the plurality of nozzles 110. In embodiments where the nozzle arrangement 100 is provided in a rotatable manner, a corresponding terminal configured to provide steam to the plurality of nozzles is provided. In one exemplary implementation, the mounting means comprises one or more channels for providing steam to the plurality of nozzles 110.

Embodiments where the nozzle arrangement 100 is rotatable, the provision of steam to the green tire 150 may be more uniform. Embodiments where the nozzle arrangement 100 does not rotate, facilitates the provision of steam to specific sections of the green tire 150.

Preferably, the heating arrangement further comprises a bladder system 140. Preferably, the bladder system 140 is configured to be filled with the steam provided by the nozzle arrangement 100. The bladder system 140 is preferably fabricated from heat-resistant, expandable materials configured to maintain structural integrity under high temperatures and/or pressures. Preferably, the bladder system 140 is configured to be inserted into the green tire 150 and to expand radially when steam is provided by through the nozzle arrangement 100. This expansion presses the green tire 150 outward.

Preferably, the heating arrangement comprises one or more sensors configured to determine a temperature in a receiving volume 210 for receiving the steam form the nozzle arrangement 100. Preferably, the receiving volume 210 is formed by an inner side surface of the green tire 150 and optionally, a means for receiving the green tire 220 and/or the curing device 200. More preferably, the receiving volume 210 is formed by the bladder system 140 within the inner surface of the green tire 150 and optionally, the means for receiving the green tire 220 and/or the curing device 200.

Additionally, or alternatively, the heating arrangement comprises means for determining a temperature gradient in the green tire and controlling means configured to control the steam provided by the plurality of nozzles 110 based on the determined temperature gradient in the green tire. Preferably, the controlling means is configured to increase the steam provided by the plurality of nozzles 110, if it is determined that the gradient in the green tire increases. Additionally or alternatively, the means for determining the temperature gradient are configured to determine a steam pressure in the bladder system and/or inside the receiving volume. Additionally or alternatively, the controlling means are configured to control the steam provided by the plurality of nozzles 110 based on the determined steam pressure in the bladder system and/or inside the receiving volume. Preferably, the controlling means is configured to increase the steam provided by the plurality of nozzles 110, if it is determined that the steam pressure in the bladder system and/or inside the receiving volume decreases.

For example, the heating arrangement comprises one or more sensors configured to determine a temperature gradient and/or steam pressure in the receiving volume 210. Based on the arrangement of the one or more sensors and the measurement data provided by the one or more sensors, a controller may be configured to determine a temperature gradient and/or steam pressure distribution inside the receiving volume 210. Based on the determination, the controller may provide a control signal to instruct one or more of the plurality of nozzles 110 to provide a certain amount of steam to the receiving volume 210. For example, the means for providing steam may be configured to provide steam to the plurality of nozzles 110 of the nozzle arrangement 100 in accordance with the control signal provided by the controller.

Alternatively, the one or more sensors and/or the controller may be part of the curing device 200. In embodiments where the means for providing steam is part of the heating arrangement, the means for providing steam may be configured to provide steam to the plurality of nozzles 110 of the nozzle arrangement 100 in accordance with the control signal provided by the controller. Alternatively, a means for providing steam in the curing device 200 may be configured to provide steam to the terminal of the nozzle arrangement 100 in accordance with a control signal provided by the controller.

In Fig. 1, the downward direction D will be described in more detail. In the context of the present invention, being arranged to provide steam in the downward direction D means that the plurality of nozzles 110 provide steam at an angle (between 0° and 90°) with respect to the outside surface of the (preferably cylindrical) nozzle arrangement 100 extending in the longitudinal direction of the nozzle arrangement 100. Preferably, the outside surface of the (preferably cylindrical) nozzle arrangement 100 extends in the reference direction G. Preferably, the reference direction G is a direction in which the green tire 150 is inserted into the means for receiving the green tire 220/into the curing mold. Preferably, the plurality of nozzles 110 are arranged on a plane P that is substantially perpendicular to the reference direction G.

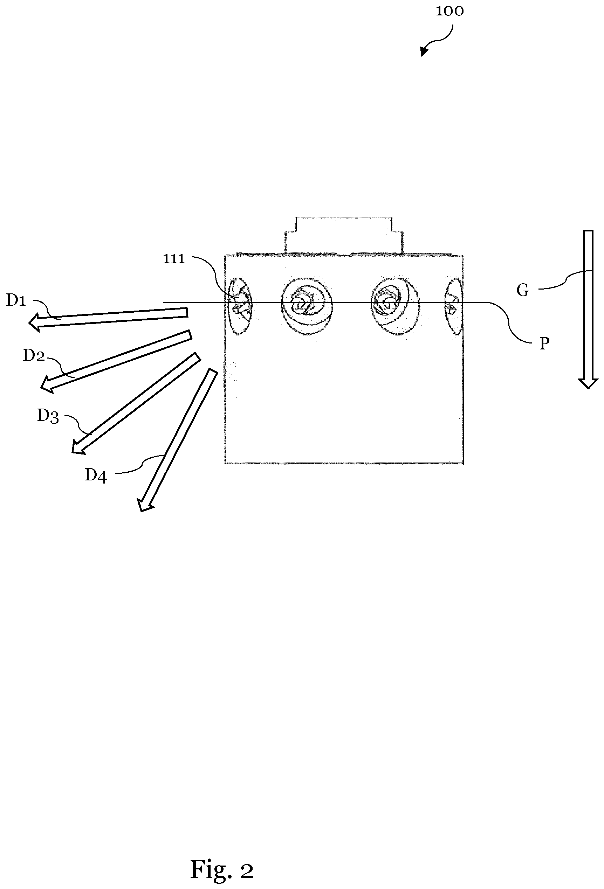

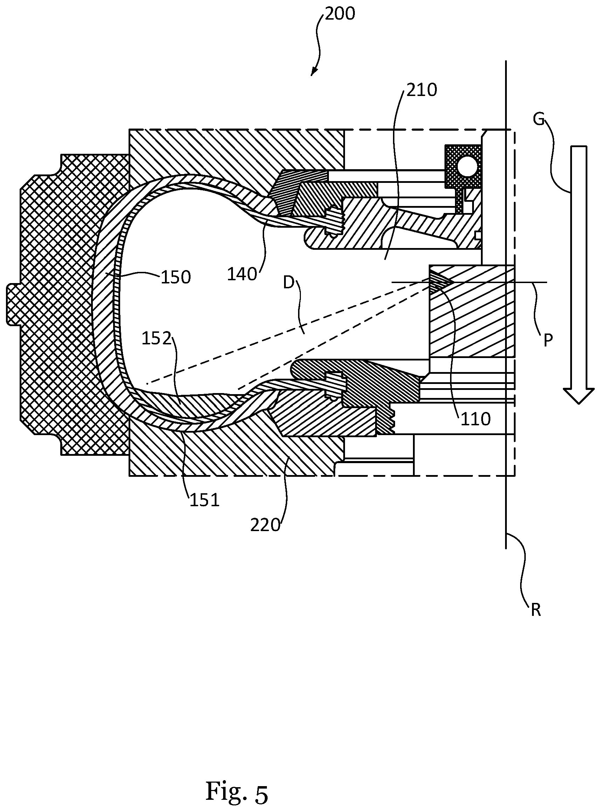

Additionally or alternatively, the downward direction D may be defined with respect to the axis of rotation R (see Fig. 5) of the green tire 150, once the green tire 150 positioned/inserted into the means for receiving the green tire 220/the curing mold. This means that the downward direction is a direction having an angle of 0° to 90° with the axis of rotation R of the green tire 150. Preferably, the axis of rotation R of the green tire 150, once the green tire 150 positioned/inserted into the means for receiving the green tire 220/the curing mold, is parallel to the reference direction G. Preferably, the nozzle arrangement 220 is arranged parallel to the axis of rotation R of the green tire 150, if the green tire 150 is positioned/inserted into the means for receiving the green tire 220 and/or the curing mold. This means that the plurality of nozzles 110 may provide steam at an angle between 0° and 90° with the axis of rotation R of the inserted green tire. Preferably, the plurality of nozzles 110 are substantially arranged on a plane P that is perpendicular to the axis of rotation R of the inserted green tire 150 in the means for receiving the green tire 220/curing mold. For example, in the exemplary nozzle arrangement shown in Figs. 1 and 2, the axis of rotation R of the green tire 150 is substantially parallel to the longitudinal direction of the (preferably cylindrical) nozzle arrangement 100 (which extends in the reference direction G). In this case, the plurality of nozzles 110 provide steam at an angle between 0° and 90° with the rotational axis of the inserted green tire.

The above reference systems for describing the downward direction D are preferred in cases where the direction of insertion and/or the axis of rotation of the green tire 150 inserted into the means for receiving the green tire 220 are substantially parallel to the direction of gravity.

Additionally or alternatively, the downward direction may be defined with respect to the direction of gravity. In this case, the reference direction G corresponds to the direction of gravity. This means that the plurality of nozzles 110 (the downward direction D) may form an angle with the direction of gravity between 0° and 90°. Preferably, the as shown in Figs. 1 and 2, the direction of gravity is substantially parallel to the longitudinal direction of the (preferably cylindrical) nozzle arrangement 100.

In embodiments where the means for receiving the green tire 220 and/or the curing mold are arranged in manner that the axis of rotation of the tire is not substantially perpendicular to the direction of gravity, the reference system for describing the downward direction D relative to the direction of gravity is preferred.

In Fig. 2 examples of downward direction D are shown for nozzle 111. The downward direction D is formed between the plane P, on which the plurality of nozzles 110 (and nozzle 111 in particular) are arranged, and the gravitational direction G, corresponding to the longitudinal extension of the nozzle arrangement 100. For example, as illustrated with exemplary downward directions D1, D2, D3, D4, any direction extending in the area formed by the plane P and the direction G qualify as downward direction D. Preferably, the direction of gravity corresponds substantially to the downward direction G. In particular, in the curing device 200, the nozzle arrangement 100 is preferably arranged such that the gravitational direction G corresponds substantially to the direction of gravity.

Preferably, the plurality of nozzles 110 shown inf Figs. 1 and 2 are movable. Preferably, the plurality of nozzles 110 are configured to be moved in an initial set up phase of the heating arrangement, meaning that during calibration of the system, the direction in which the plurality of nozzles 110 provide steam to the receiving volume 210 may be configured. Additionally or alternatively, the plurality of nozzles are configured to be moved by means of a control signal provided by the controller. Preferably, the plurality of nozzles 110 are moveable in any direction. In some embodiments, the plurality of nozzles 110 are movable only in an up-down direction - corresponding to the gravitational direction G - by means of the control signal. This facilitates steering the direction in which the plurality of nozzles 110 provide steam to the green tire 150.

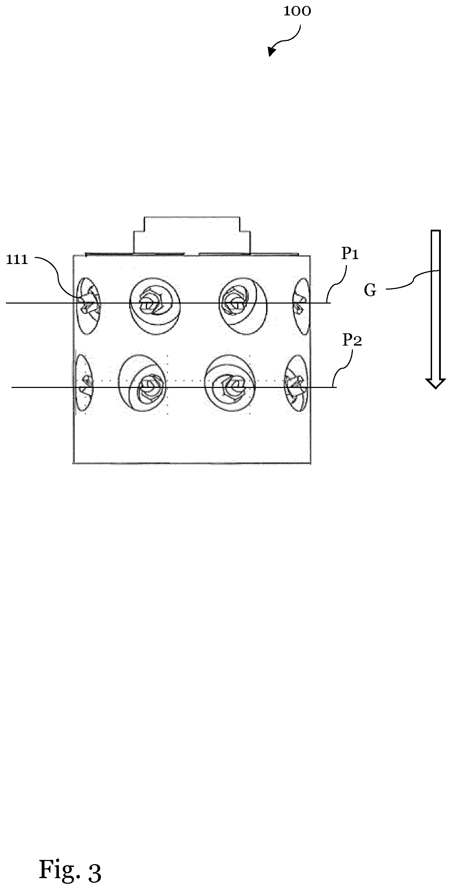

Fig. 3 relates to an exemplary nozzle arrangement with two or more layers of nozzles. Any aspects described above apply also for any of the exemplary arrangements of Fig. 3.

Multiple layers of nozzles may be provided on different plane Px (P1, P2). A layer of nozzles in a plane Px relates to one or more nozzles having (substantially) the same height in the direction G.

In the example of Fig. 3, two layers of nozzles are provided in the plane Px (P1, P2). The nozzles of plane P1 have a same height in the direction G and the nozzles of Plane P2 have the same height in the direction G. The nozzles of each plane may be directed in a similar direction as the nozzles of the other plane, or in a different direction. Moreover, individual nozzles of each plane may be directed in a same direction as other nozzles of the plane, or in a different direction.

Providing multiple layers of nozzles allows to control the steam provision more precisely.

In Fig. 4, three exemplary geometries [a], [b], [c] of exemplary nozzle arrangements 110 are shown. Any aspects described above apply also for any of the exemplary arrangements of Fig. 3.

In example [a], the nozzle arrangement 100 comprises of an upper portion 121 and a lower portion 122. Both of the portions have a substantially cylindrical shape. The diameter of the upper portion 121 is larger than the diameter of the lower portion 122. The upper portion 121 comprises the plurality of through holes extending through the side surface and the upper surface. The plurality of nozzles 110 are arranged in through holes extending through the side surface of the upper portion 121 and fixings for fixing the plurality of nozzles 110 in their respective through holes are provided in the through holes extending through the upper surface of the upper portion 121. In this example, the mounting channel 130 may be provided through the upper portion 121 and the lower portion 122.

Preferably, a longitudinal extension of the upper portion 121 is at least 50 mm, preferably at least 55 mm, more preferably at least 65 mm, even more preferably at least 80 mm and most preferably at least 90 mm; and/or wherein the longitudinal extension of the upper portion is at most 110 mm, preferably at most 105 mm, even more preferably at most 100 mm and most preferably at most 95 mm. In one particular embodiment, the longitudinal extension of the upper portion 121 is between 89 and 93 mm.

Preferably, a longitudinal extension of the lower portion 122 is at least 45 mm, preferably at least 50 mm, more preferably at least 55 mm, even more preferably at least 60 mm and most preferably at least 65 mm; and/or wherein the longitudinal extension of the upper portion is at most 90 mm, preferably at most 85 mm, even more preferably at most 80 mm and most preferably at most 75 mm. In one particular embodiment, the longitudinal extension of the lower portion 122 is between 74 and 76 mm.

In example [b], the nozzle arrangement 100 comprises the upper portion 121. A lower portion 122 with a smaller diameter is not provided. The longitudinal extension of the upper portion 121 corresponds to the longitudinal extension of the upper portion 121 of example [a]. Similarly, the plurality of nozzles 110 are arranged in through holes extending through the side surface of the upper portion 121 and fixings for fixing the plurality of nozzles 110 in their respective through holes are provided in the through holes extending through the upper surface of the upper portion 121. The mounting channel 130 may be provided in the upper portion 121.

Preferably, a longitudinal extension of the upper portion 121 is at least 50 mm, preferably at least 55 mm, more preferably at least 65 mm, even more preferably at least 80 mm and most preferably at least 90 mm; and/or wherein the longitudinal extension of the upper portion is at most 110 mm, preferably at most 105 mm, even more preferably at most 100 mm and most preferably at most 95 mm. In one particular embodiment, the longitudinal extension of the upper portion 121 is between 89 and 93 mm.

Example [c] is similar to example [b], wherein the longitudinal extension of the upper portion 121 is larger than the longitudinal extension of the upper portion 121 in example [b]. The remaining aspects and portions are similar to example [b].

Preferably, a longitudinal extension of the upper portion 121 is at least 90 mm, preferably at least 100 mm, more preferably at least 110 mm, even more preferably at least 120 mm and most preferably at least 130 mm; and/or wherein the longitudinal extension of the upper portion is at most 160 mm, preferably at most 150 mm, even more preferably at most 140 mm and most preferably at most 135 mm. In one particular embodiment, the longitudinal extension of the upper portion 121 is between 131 and 137 mm.

In another example, a longitudinal extension of the upper portion 121 may be at least 110 mm, preferably at least 120 mm, more preferably at least 130 mm, even more preferably at least 140 mm and most preferably at least 150 mm; and/or wherein the longitudinal extension of the upper portion is at most 180 mm, preferably at most 170 mm, even more preferably at most 165 mm and most preferably at most 160 mm. In one particular example, the longitudinal extension of the upper portion 121 is between 153 and 163 mm.

In the examples of Fig. 4, the plurality of nozzles 110 comprise of 8 nozzles. The plurality of nozzles 110 are arranged on the plane P perpendicular to the gravitational direction G. In this example, the plurality of nozzles 110 are arranged in a substantially circular shape. The corresponding fixings positioned in their corresponding through holes extending through the upper side surface of the nozzle arrangement 100 are also arranged in a substantially circular shape.

Each of the nozzle arrangements of examples [a] [b] and [c] in Fig. 3 comprise the mounting channel 130.

Fig. 5 shows a crosse sectional view of an exemplary curing device 200 according to the invention. In particular, Fig. 5 shows one half of the cross-sectional view of the exemplary curing device. The curing device 200 comprises the means for receiving a green tire 220 and the above-described heating arrangement. The means for receiving the green tire 220 has a substantially cylindrical shape configured to receive the substantially ring-shaped green tire 150. In the example of Fig. 5, the green tire 150 is inserted into the means for receiving the green tire 220. In particular, Fig. 5 shows the curing device 200 in a closed position, corresponding to a position in which the green tire 150 can be cured. In contrast, for removing the cured tire and for inserting the green tire 150, the curing device 200 may alternatively be in an open position.

Preferably, the nozzle arrangement 100 is provided in a central axis position of the means for receiving the green tire 220. This means that the nozzle arrangement 100 is provided in a central axis position of the green tire 150 inserted into the means for receiving the green tire 220. The central axis position may be a rotational central position of the green tire 150 inserted into the means for receiving the green tire 220.

The green tire 150 comprises uncured rubber compounds forming its tread, sidewalls, skims of belts, and inner liner, wherein the dimensions of the green tire 150 are designed to fit closely within a mold cavity of the means for receiving the green tire 220, optimizing contact with the mold cavity of the means for receiving the green tire 220.

For curing the green tire 150, the curing device is configured to provide a curing temperature within the range of 120° to 230°, preferably within the range of 130° to 220°, more preferably within the range of 140° to 210° and most preferably within the range of 150°C to 200°C, ensuring proper vulcanization of the green tire 150. The heat is provided from outside the tire by means of the means for receiving the green tire 220 and from the inside by means of the heating arrangement described above.

The curing cycle time varies depending on tire specifications, typically ranging from 8 to 25 minutes, preferably from 10 to 15 minutes for passenger car tires. During this period, the one or more sensors and/or the controller continuously monitor and provide feedback to adjust the heating and pressure parameters of the curing device, ensuring consistent vulcanization across the tire structure. Once the predetermined curing time is complete, the tire may cool within the means for receiving the tire before being removed/ejected.

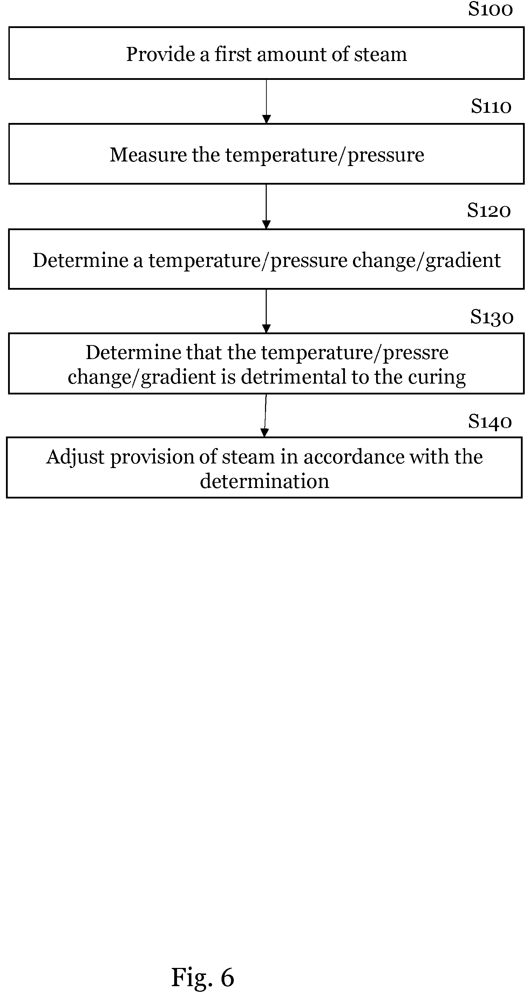

In Fig. 6, a method for curing a green tire 150 in a curing device according to the present invention is described in more detail.

The method of Fig. 6 describes the steps of the curing process after the green tire 150 is inserted in the curing device. In particular, after the green tire 150 is inserted into the (curing mold of the) means for receiving the green tire 220.

In a first step, a first amount of steam is provided into the receiving volume 210 by the plurality of nozzles 110 of the heating arrangement. Preferably, the first amount of steam corresponds to a steam pressure is at least 14 bar, mor preferably at least 15 bar and most preferably at least 16 bar and/or at most 19 bar, more preferably at most 18 bar and most preferably at most 17 bar, in one particular example, the first amount of steam is around 16.5 bar. Preferably, the receiving volume 210 is formed by the curing device and the inner surface of the green tire 150. More preferably, the receiving volume 210 is formed by the bladder system 140 within the inner surface of the green tire 150. Preferably, the first amount of steam is constant. The first amount of steam corresponds to a first temperature gradient and/or first pressure of steam and/or a first flow rate of steam. The first amount of steam may be provided in the downward direction. Alternatively, the first amount of steam may be provided in a direction different to the downward direction D, such as a direction opposite the downward direction D or in a direction perpendicular to the gravitational direction G/perpendicular to the nozzle arrangement 100 (which corresponds to a direction in the plane P).

During provision of steam by the heating arrangement, the one or more sensors measure S110 the temperature and/or pressure inside the receiving volume. In some embodiments, the one or more sensors include a force sensor configured to measure a weight change inside the bladder system 140 of the curing device 200. Preferably, the one or more sensors are provided as part of the heating arrangement. Alternatively, the one or more sensors are provided as part of the curing device 200. For example, a steam pressure sensor may be provided in a system for providing steam to the curing device 200. For example, the steam pressure sensor may be provided in a piping system configured to provide steam to the curing device 200. Preferably, the temperature/pressure measurements are performed at constant intervals. The sensor data obtained by the one or more sensors are transmitted to a memory and/or a controller.

In step S120, the controller determines a temperature change and/or gradient, and/or a pressure change and/or gradient, and/or a weight change. For example, the one or more sensors may be provided at multiple positions adjacent and/or in the receiving volume 210, such that, based on the individual sensor results, a temperature/pressure distribution within the receiving volume 210 can be determined/estimated by the controller. Based on the determined temperature/pressure distribution, the controller may determine that a temperature/pressure change occurred between two measurements. Additionally or alternatively, the controller may determine, based on the temperature/pressure distribution, a temperature/pressure gradient inside the receiving volume 210 of the curing device 200.

The temperature/pressure change/gradient may occur based on the thermodynamic behavior of the heated steam. For example, colder portions of steam accumulate at a lower portion of the green tire 150, while hotter portions of steam accumulate at the upper portions of the green tire 150. Similarly, areas of high pressure and areas of low pressure might form for the same reason. Additionally or alternatively, steam inside the green tire 150 (of inside the bladder system 140) may condensate and form the puddle 152 of condensate at the bottom of the green tire 150 (or of the bladder system 140). This condensate may also influence the temperature/pressure distribution within the green tire 150 (or the bladder system 140). Based on the temperature/pressure measurements, it may be determined that such a puddle 152 has formed.

Additionally, the one or more force sensors may determine that a (gravitational) force of the bladder system has changed. For example, if large amounts of steam have condensed inside the bladder system 140, the puddle 152 might form. Due to the shape of the green tire 150 and/or the bladder system 140, the puddle 152 forms in the downward direction bulge portion of the green tire 151. The weight of the formed puddle 152 might be measured by the one or more force sensors.

Preferably, a threshold is defined indicating that an amount of temperature/pressure/weight change and/or a temperature/pressure gradient is non detrimental to the curing of a tire. In step S130, it is determined whether the change/gradient is detrimental to the curing of the tire. Preferably, this is determined based on the threshold and the determination of the temperature/pressure/weight change and/or temperature/pressure gradient.

Based on the determination in step S130, the provision of steam is adjusted in accordance with the determination. In particular, one or more of the plurality of nozzles 110 provide steam in the downward direction D. In embodiments where the plurality of nozzles 110 can move in the up-down direction during curing of the tire, one or more of the plurality of nozzles 110 may change the direction of steam provision to the downward direction D.

Preferably, the one or more of the plurality of nozzles 110 provide a second amount of steam in accordance with the determination. The second amount of steam may be similar to the first amount of steam. Preferably, the second amount of steam is provided to increase the pressure inside the receiving volume to the first amount of steam. Once the first amount of steam is achieved, the provision of second amount of steam may be ceased.

Preferably, the controller creates a control signal controlling the amount/pressure of steam provided by the plurality of nozzles 110 and/or the direction of steam provision by the plurality of nozzles 110.

By changing the amount, pressure and/or position of steam provision by the plurality of nozzles 110, the temperature/pressure change/gradient can be counteracted and/or improved. In particular, a size/weight of the puddle 152 of condensed steam at the bottom of the receiving volume 210 can be reduced.

This improvement of the temperature/pressure/weight in the system can be determined and the provision of steam can be adjusted in accordance with this improvement. For example, the amount/pressure/temperature of steam provided by the plurality of nozzles 110 may be adjusted again to correspond to the first amount of steam, provided in step S100. In embodiments where the direction of the plurality of nozzles 110 can be adjusted during curing of the green tire 150, the nozzles 110 may be moved back into the default position of step S100.

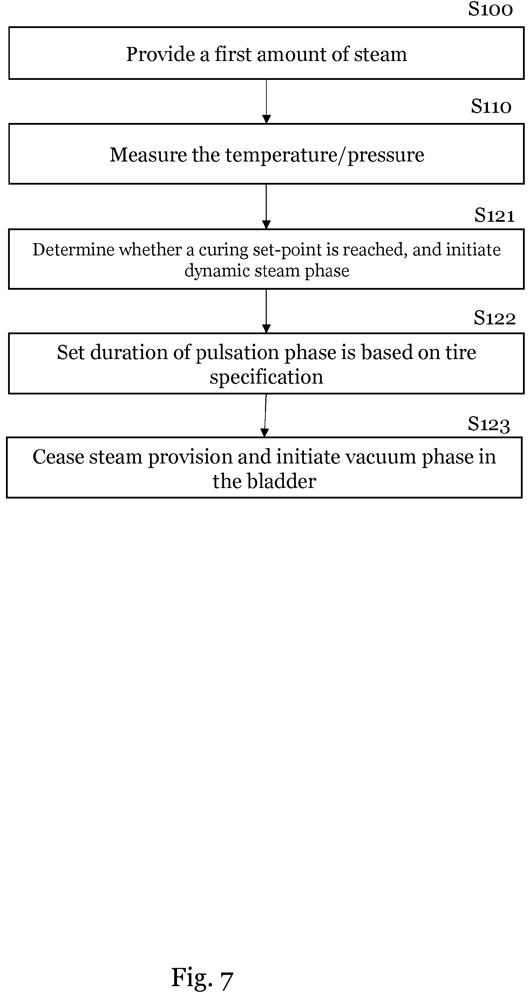

In Fig. 7, another method for curing a green tire 150 in a curing device according to the present invention is described in more detail.

The method of Fig. 7 describes the steps of the curing process after the green tire 150 is inserted in the curing device. In particular, after the green tire 150 is inserted into the (curing mold of the) means for receiving the green tire 220.

The method of Fig. 7 is similar to the method of Fig. 6. However, the method of Fig. 7 may additionally or alternatively comprise one or more of steps S121, S122 and S123.

For example, during the temperature/pressure measurement step in step S110, it may further be determined whether a predetermined set point is reached.

Once the predetermined set point is reached, a dynamic steam phase may be initiated S121.

During the dynamic steam phase S121, the steam is provided as pulsed steam S122, preferably to provide a pressure around +/- 0.5bar around the set-point. The pulse duration is set based on the specification of the tire to be obtained and/or of the specification of the green tire. Preferably, the set of point of the steam pressure is at least 14 bar, mor preferably at least 15 bar and most preferably at least 16 bar and/or at most 18 bar, more preferably at most 17 bar and most preferably at most 16 bar.

After a predetermined time has lapsed, in step S123, the steam provision is ceased, and a vacuum phase is initiated. In the vacuum phase, the pressure inside the bladder system is reduced, preferably to an ambient pressure, even more preferred to a pressure below ambient. For example, the pressure may be reduced to minus 1 bar. This may drain the condensate from the receiving volume and may deplete the bladder inside the green tire, such that the cured tire may be removed, and a new green tire may be inserted. After insertion, the methods described with reference to Figs. 6 and 7 may be repeated.

The methods described with reference to Figs. 6 and 7 may further comprise an optional step S150. Step S150 may be performed after step S140 and/or as part of step S123, before the vacuum phase is initiated.

In step S150, it may be determined that the green tire 150 is (likely) cured. This determination may be based on a determination that steam was provided for a certain (preferably predetermined) amount of time. Additionally or alternatively, the determination may be based on a measurement, such as a pressure or temperature measurement.

Based on the determination, the provision of steam is ceased and preferably, a secondary agent is provided. The secondary agent may be a gas, a liquid or a combination thereof. For example, the secondary agent may be nitrogen gas. Preferably, the secondary agent is provided at a higher pressure than the steam. Preferably, the secondary agent is provided at a pressure to remove air bubbles from inside the cured tire. For example, the secondary agent may be provided at a pressure of at least 18 bar, preferably of at least 19 bar, more preferably of at least 20 bar and most preferably of at least 21 bar and/or at a pressure of at most 23 bar, preferably of at most 22 bar and most preferably of at most 21 bar. Preferably, the secondary agent is provided at a temperature substantially lower than the temperature of the steam. Preferably, the provision of steam and secondary curing agent is in a way such that steam is provided for around 85 % of the duration and the secondary agent for around 15% of the duration.

The invention also relates to a computer program comprising instructions which, when executed by a processor, cause the processor to carry out the method described above. Preferably, the instructions cause the processor to instruct a curing device to carry out method (steps) described above.

The present invention also relates to a computer a computer-readable (storage) medium comprising instructions which, when executed by a computer, cause the computer to carry out the method (steps) described above. Preferably, the instructions cause the computer to instruct a curing device to carry out the steps of the method (steps) described above.
- 100: nozzle arrangement
- 110: plurality of nozzles
- 111: nozzle
- 121: upper portion
- 122: lower portion
- 130: mounting channel
- 140: bladder system
- 150: green tire
- 151: downward bulging portion of the green tire
- 152: puddle
- 200: curing device
- 210: receiving volume
- 220: means for receiving the green tire
- G: gravitational direction
- D1, D2, D3, D4: downward directions
- P: plane
- P1, P2: first and second plane

## Claims

1. A heating arrangement for curing a green tire (150) in a curing device (200), comprising:
a nozzle arrangement (100) comprising a plurality of nozzles (110) configured to provide steam to the green tire (150), wherein the plurality of nozzles (110) are configured to provide the steam in a downward direction (D), wherein the downward direction (D) is a direction forming an angle of 0° to 90° with the axis of rotation (R) of the green tire (150).

2. The heating arrangement according to the preceding claim, wherein the plurality of nozzles (110) are arranged in a substantially cylindrical shape, wherein preferably the nozzle arrangement (100) has a cylindrical shape.

3. The heating arrangement according to any one of the preceding claims, wherein each nozzle of the plurality of nozzles (110) is configured to provide steam in a substantially triangular or conical-shape pattern, wherein preferably the plurality of nozzles (110) are cone nozzles or flat-fan nozzles, wherein preferably, the spread-angle of the steam provided by the nozzle is between 15° and 65°, preferably between 20° and 55°, more preferably between 30° and 45°, most preferably between 37.5° and 42.5°.

4. The heating arrangement according to any one of the preceding claims, wherein an angle of plurality of nozzles (110) in the downward direction (D) is adjustable.

5. The heating arrangement according to any one of the preceding claims, further comprising:
means for determining a steam pressure in the green tire (150); and
controlling means configured to control the steam provided by the plurality of nozzles (110) based on the determined steam pressure in the green tire (150).

6. The heating arrangement according to the preceding claim, wherein the controlling means is configured to increase the steam provided by the plurality of nozzles (110), if it is determined that the pressure in the green tire (150) decreases.

7. The heating arrangement according to any one of the preceding claims, wherein the nozzle arrangement (100) is positioned in a central axis position of the green tire (150), wherein the plurality of nozzles (110) are configured to provide steam to a downward direction bulge portion (151) of the green tire (150).

8. The heating arrangement according to any one of the preceding claims, wherein the plurality of nozzles (110) comprise at least 4 nozzles, preferably at least 5 nozzles, more preferably at least 6 nozzles, even more preferably at least 7 nozzles and most preferably at least 8 nozzles.

9. The heating arrangement according to any one of the preceding claims, wherein the nozzle arrangement (100) is rotatable.

10. The heating arrangement according to any one of the preceding claims, wherein the plurality of nozzles are arranged in at least two layers in the downward direction (D).

11. A method for curing a green tire (150) in a curing device (200), comprising:
providing steam in a downward direction (D), preferably providing steam to a low temperature area and/or low pressure area in the green tire (150).

12. The method for curing a green tire (150) in a curing device (200) according to the preceding claim, further comprising:
providing steam to the inside of a green tire (150) for curing the green tire (150);
while providing steam to the green tire (150), determining a temperature gradient and/or steam pressure gradient in the green tire (150); and
providing the steam in the downward direction (D), based on the determined temperature gradient and/or steam pressure gradient in the green tire (150).

13. The method for curing a green tire (150) in a curing device (200) according to the preceding claim, wherein the curing device (200) comprises the heating arrangement according to any one of the preceding claims, the method further comprising:
adjusting the direction in which the nozzles provide steam, based on the determined steam pressure change in the green tire (150).

14. A computer program comprising instructions that, when executed by a processor, instruct a heating arrangement according to any one of claims 1 to 10 to perform the method according to any one of claims 11 or 12.

15. A curing device (200) for curing a green tire (150), comprising:
the heating arrangement according to any one of claims 1 to 10; and
a means for receiving the green tire (220).
